# EUROPEAN PATENT APPLICATION

(11) **EP 4 779 169 A1**
(43) Date of publication of application: **22.07.2026**
(21) Application number: 25220699.0
(22) Date of filing: 04.12.2025
(51) Int. Cl.: F16D 66/02, B60T 17/22

(54) **BRAKE SYSTEM AND METHOD OF CONTROL**

(30) Priority: 18.12.2024 US 202418985225
(71) Applicant: ArvinMeritor Technology, LLC, Troy, MI 48084 (US)
(72) Inventor: Philpott, Daniel, Troy, 48084 (US)
(74) Representative: Whitfield, Jack Stephen

(57) **Abstract**

A brake system and a method of control. The brake system comprises a friction brake, a sensor unit, and a controller. The sensor unit is disposed on a brake pad assembly of the friction brake and comprises a first sensor and a second sensor that is electrically connected to the first sensor.

## Description

### TECHNICAL FIELD

The invention relates to a brake system and a method of control.

### BACKGROUND

A disc brake assembly having a sensor assembly is disclosed in U.S. Patent No. 11,649,864. This application claims priority to US Patent Application No. 18/985225 filed at the USPTO on 18 December 2024 entitled Brake Systems and Method of Control.

### SUMMARY

The invention relates to a brake system. The brake system comprises a friction brake, a sensor unit, and a controller. The friction brake comprises a brake pad assembly. The brake pad assembly comprises a backplate and friction material. The backplate comprises a first side and a second side. The first side is disposed opposite the second side. The friction material extends from the first side. The friction material extends away from the second side. The sensor unit is disposed on the brake pad assembly. The sensor unit comprises a first body, a first sensor, a second body, and a second sensor. The first body extends from the first side of the backplate. The first body is disposed proximate the friction material. The first sensor is disposed inside the first body. The second body extends from the second side of the backplate. The second body is connected to the first body. The second sensor is disposed inside the second body. The first sensor is electrically connected to the second sensor. The controller is electrically connected to the second sensor by a data bus.

The first sensor may be encapsulated in the first body. The first sensor may not be disposed in the second body. The second sensor may be encapsulated in the second body. The second sensor may not be disposed in the first body.

The backplate may extend from the first body to the second body. The backplate may separate the second body from the friction material. The second body may not contact the friction material.

The sensor unit may be secured to the backplate. The first sensor may be a thermistor. The thermistor is configured to provide a signal indicative of temperature of the first body to the second sensor.

The second sensor may be configured to receive the signal from the first sensor. The second sensor may be configured to generate an output signal. The output signal may comprise a serial number and a temperature code. The serial number may be the serial number of the second sensor. The temperature code may be based on the signal from the first sensor.

The controller may be configured to receive the output signal from the second sensor via the data bus. The controller may be configured to determine a location of the sensor unit based on the serial number. The controller may be configured to determine a temperature value based on the temperature code.

The thermistor may be indicative of a state of wear of the friction material of the brake pad assembly. The signal may be indicative of the state of wear when the signal is indicative of resistance that is less than a first resistance boundary value. The signal may be indicative of the state of wear when the signal is indicative of resistance that is greater than a second resistance boundary value.

The invention also relates to a method of controlling a brake system. The method includes providing a signal with a first sensor of a sensor unit to a second sensor of the sensor unit. The sensor unit is disposed on a brake pad assembly of a friction brake. The signal is indicative of a temperature of the brake pad assembly. The method includes generating, with the second sensor, an output signal that comprises a serial number of the second sensor and a temperature code. The temperature code is based on the signal from the thermistor. The method includes communicating the output signal to a controller. The method includes identifying, with the controller, a location of the sensor unit based on the serial number. The method includes identifying, with the controller, a temperature of the sensor unit based on the temperature code. The method includes communicating, with the controller, the location and temperature of the sensor unit to a communication device.

Communicating the output signal may further comprise communicating the output signal to the controller via a data bus. Communicating the location and temperature of the sensor unit to the communication device may further comprise providing a notification with the communication device when the temperature exceeds a predetermined temperature value.

The method may further comprise mounting the sensor unit on the brake pad assembly such that a first body of the sensor unit that encapsulates the first sensor extends from a first side of a backplate of the brake pad assembly that is disposed adjacent to friction material of the brake pad assembly, and such that a second body of the sensor unit that encapsulates the first sensor extends from a second side of the backplate that is disposed opposite the first side before providing the signal with the first sensor.

The invention relates to a brake system. The brake system comprises first and second friction brakes, a controller, and a wire harness. The first and second friction brakes each comprise a brake pad assembly and a sensor unit. The brake pad assembly comprises a backplate and friction material. The backplate has a first side and a second side. The first side is disposed opposite the second side. The friction material extends from the first side. The friction material extends away from the second side. The sensor unit is disposed on the backplate. The sensor unit comprises a first body, a first sensor, a second body, and a second sensor. The first body extends from the first side of the backplate. The first body is disposed proximate the friction material. The first sensor is disposed inside the first body. The second body extends from the second side of the backplate. The second body is connected to the first body. The second sensor is disposed inside the second body. The second sensor is electrically connected to the first sensor. The wire harness comprises a first resistor, a second resistor, a first conductor, a second conductor, and a data bus. The first resistor is electrically connected to the sensor unit of the first friction brake with the first conductor. The second resistor is electrically connected to the sensor unit of the second friction brake with the second conductor. The first resistor and the second resistor have different electrical resistances. The data bus electrically connects the controller to the sensor unit of the first friction brake. The data bus electrically connects the controller to the sensor unit of the second friction brake.

The second sensor of the sensor unit of the first friction brake may be configured to measure a resistance value of the first resistor. The second sensor of the sensor unit of the first friction brake may be configured to generate a first location address based on the resistance value of the first resistor. The second sensor of the sensor unit of the first friction brake may be configured to provide the first location address to the controller. The first location address may be indicative of a location of the sensor unit of the first friction brake.

The second sensor of the sensor unit of the second friction brake may be configured to measure a resistance value of the second resistor. The second sensor of the sensor unit of the second friction brake may be configured to generate a second location address based on the resistance value of the second resistor. The second sensor of the sensor unit of the second friction brake may be configured to provide the second location address to the controller. The second location address may be indicative of a location of the sensor unit of the second friction brake.

The first resistor may be disposed in a first connector plug of the wire harness. The first connector plug may be coupled to a connector plug of the sensor unit of the first friction brake. The second resistor may be disposed in a second connector plug of the wire harness. The second connector plug may be coupled to a connector plug of the sensor unit of the second friction brake.

### BRIEF DESCRIPTION OF THE DRAWINGS

Figure 1 illustrates an example of a vehicle comprising a brake system.
Figure 2 is a perspective view of an example of a friction brake.
Figure 3 is a section view of a portion of the friction brake along section line 3-3.
Figure 4 is a magnified view of a portion of Figure 3 showing friction material and an example of a sensor unit.
Figure 5 is a magnified view showing an example of worn friction material and the sensor unit.
Figure 6 is a schematic representation depicting multiple sensor units connected to a controller via a wire harness comprising a data bus.
Figure 7 is a magnified fragmentary view of an example of electrical connectors associated with the wire harness.
Figure 8 is a table showing examples of resistance values and associated output bits.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

It will also be understood that, although the terms first, second, etc. are, in some instances, used herein to describe various elements, these elements should not be limited by these terms. These terms are only used to distinguish one element from another. For example, a first element could be termed a second element, and similarly a second element could be termed a first element without departing from the scope of the various described embodiments. The first element and the second element are both elements, but they are not the same element.

The terminology used in the description of the various described embodiments is for the purpose of describing particular embodiments only and is not intended to be limiting. As used in the description of the various described embodiments and the appended claims, the singular forms "a" and "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

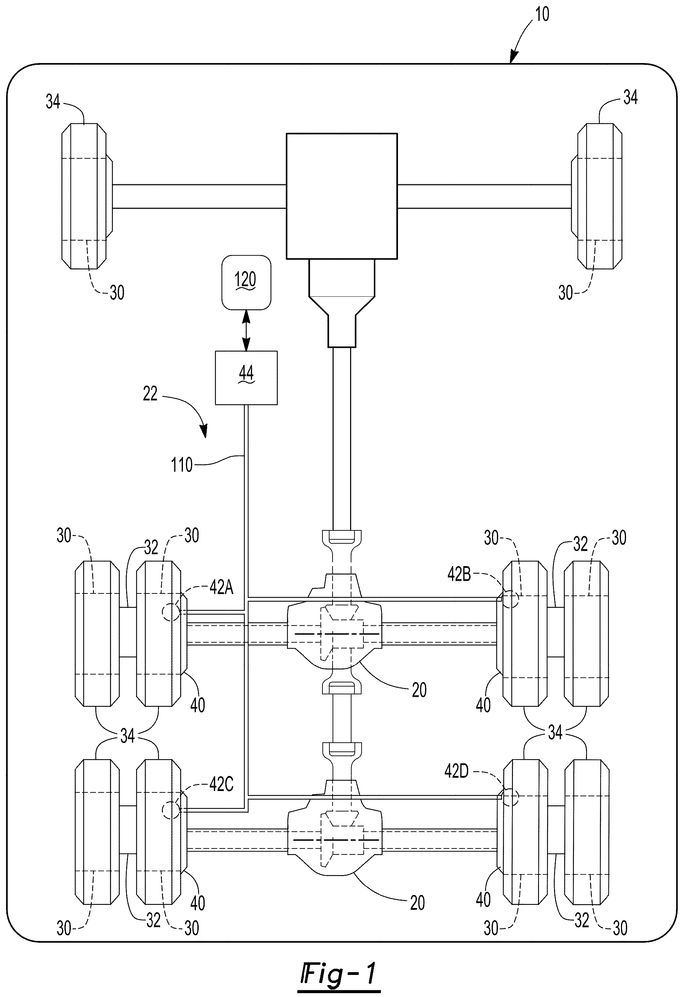

Referring to Figure 1, a schematic example of a vehicle 10 is shown. The vehicle 10 may be of any suitable type, such as a truck, bus, farm equipment, mining equipment, military transport or weaponry vehicle, cargo loading equipment for land, air, or marine vessels, a trailer for transporting cargo or the like. The vehicle 10 includes one or more axle assemblies 20 and a brake system 22.

In some configurations, an axle assembly 20 is configured to support one or more wheels 30. For example, the wheel 30 may be fastened to a wheel hub 32 that may be rotatably disposed on the axle assembly 20. A tire 34 is disposed on the wheel 30 and is rotatable with the wheel 30. The axle assembly 20 may also support a brake assembly of the brake system 22. The axle assembly 20 may be provided in a steerable configuration or a non-steerable configuration. In a steerable configuration, the axle assembly 20 may be a steerable structural component, such as a steering knuckle. The axle assembly 20 may be provided in a drive axle configuration or a non-drive axle configuration. In a drive axle configuration, the axle assembly 20 is configured to provide torque from a torque source, such as an electric motor or internal combustion engine, to an associated vehicle wheel to propel the vehicle 10. In a non-drive axle configuration, torque is not provided from a torque source to an associated vehicle wheel to propel the vehicle 10.

The brake system 22 is configured to slow or inhibit rotation of an associated wheel hub 32 and thus slow or inhibit rotation of a wheel 30 that is fastened to the wheel hub 32. In some configurations, the brake system 22 includes a set of friction brakes 40, a set of sensor units 42, and a controller 44. Individual sensor units 42 are distinguished in Figure 1 with different letters, such as A, B, C, and D after number 42.

The friction brake 40, which may also be called a foundation brake, is configured to slow rotation of a wheel hub 32. The friction brake 40 may be disposed proximate a wheel hub 32 and may be mounted to the axle assembly 20 such that the friction brake 40 does not rotate with the wheel hub 32.

Multiple friction brakes 40, which may be referred to as a set of friction brakes 40, may be provided with the vehicle 10. In the configuration shown, four friction brakes 40 are illustrated for simplicity, noting that friction brakes 40 may be provided to brake the wheels and wheel hubs depicted near the top of Figure 1.

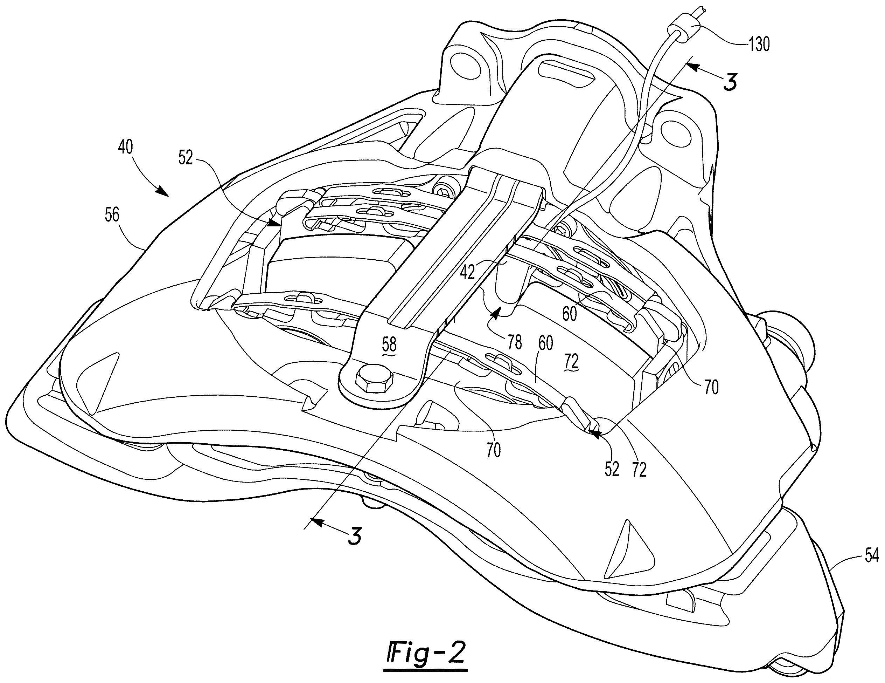

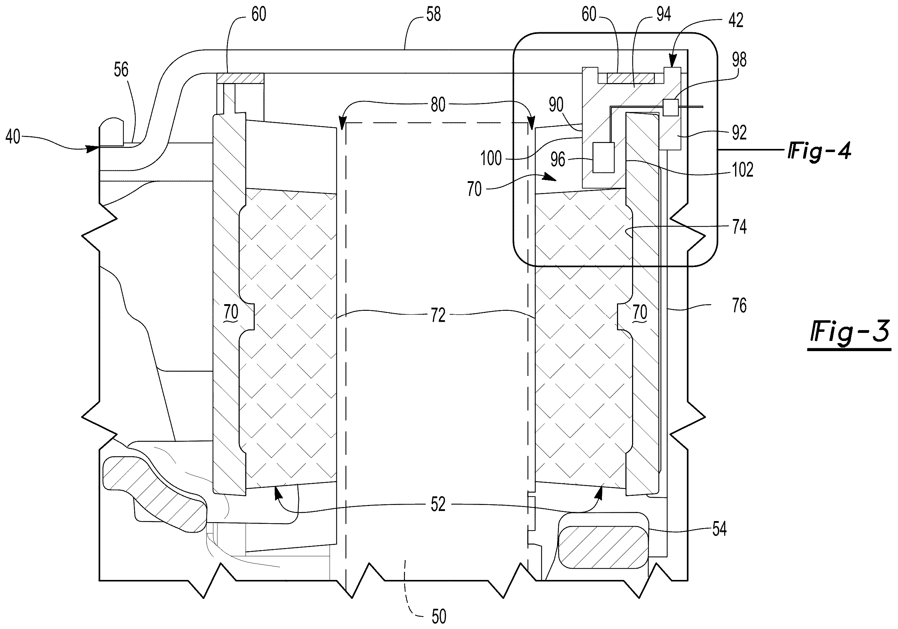

The friction brake 40 may have any suitable configuration. For example, the friction brake 40 may be configured as a disc brake or a drum brake. Referring to Figure 2, an example of a friction brake 40 is shown that is configured as a disc brake. The friction brake 40 may include or be associated with a brake friction member 50, which is best shown in Figure 3, and includes a brake pad assembly 52. In some configurations, such as when the friction brake 40 is configured as a disc brake, the friction brake 40 comprises a brake carrier 54 and a brake caliper 56 and may comprise a retainer strap 58, a pad spring 60, or both.

Referring to Figure 3, the brake friction member 50 is rotatable with the wheel hub 32. For instance, the brake friction member 50 may be secured to a wheel hub 32 and may rotate with the wheel hub 32 with respect to a brake pad assembly 52 when braking is not requested. The brake friction member 50 is shown in phantom in Figure 3 for clarity. In a disc brake configuration, the brake friction member 50 is configured as a brake rotor, which is also known as a brake disc. In a drum brake configuration, the brake friction member 50 is configured as a brake drum.

Referring to Figures 2 and 3, the brake pad assembly 52 configured to engage the brake friction member 50 when braking is requested or commanded and exert frictional force against the brake friction member 50 to retard or slow rotation of the wheel hub 32 and an associated wheel 30.

In a disc brake configuration, inboard and outboard brake pad assemblies 52 are disposed on opposite sides of the brake friction member 50 and are configured to engage opposite sides of the brake friction member 50 to retard or slow the rotation of the brake friction member 50, the wheel hub 32 and an associated wheel 30 about an axis of rotation. In such a configuration, the brake pad assemblies 52 may be received in the brake caliper 56, which is moveably disposed on the brake carrier 54. The brake carrier 54 may be secured in a stationary manner to the axle assembly 20. The brake caliper 56 facilitates positioning of the brake pad assemblies 52 with respect to the brake friction member 50. For instance, the brake caliper 56 may be configured to position the brake pad assemblies 52 in engagement with opposite sides the brake friction member 50 to facilitate braking of the brake friction member 50 and facilitate retraction of the brake pad assemblies 52 to disengage the brake friction member 50.

In a drum brake configuration, one or more brake pad assemblies, which may also be called brake shoes, are configured to engage an inner surface of a brake drum that faces toward an axis of rotation of the wheel hub. For instance, a camshaft may be rotated in a first rotational direction to actuate a brake pad assembly into engagement with the inner surface of the brake drum to exert brake torque and the camshaft may be rotated in a second rotational direction to retract the brake pad assembly away from the inner surface of the brake drum.

The brake pad assemblies 52 are configured to engage and exert force on the brake friction member 50 during braking. In some configurations, a brake pad assembly 52 comprises a backplate 70 and friction material 72.

The backplate 70, which may also be called a table, is a structural member of a brake pad assembly 52. The backplate 70 may be configured as a plate and may be made of any suitable material, such as metal or a metal alloy. A backplate 70 may be generally flat in a disc brake configuration and may be curved along an arc that follows the curvature of the inner side of a brake drum in a drum brake configuration. As is best shown in Figure 3, the backplate 70 comprises a first side 74 and a second side 76.

The first side 74 faces toward the brake friction member 50. For instance, the first side 74 may face toward a brake rotor in a disc brake configuration and face toward the inner side of a brake drum in a drum brake configuration.

The second side 76 is disposed opposite the first side 74. As such, the second side 76 may face away from the brake friction member 50.

The friction material 72 is configured to contact the brake friction member 50 during braking. The friction material 72, which may also be called a brake lining, is disposed on and extends from the first side 74 of the backplate 70. The friction material 72 extends away from the second side 76 toward the brake friction member 50. The friction material 72 is secured to the backplate 70 such that the friction material 72 and the backplate 70 move together when a brake pad assembly 52 is actuated.

Referring to Figures 2 and 3, the friction material 72 may include a recess 78. The recess 78 may extend from the backplate 70 or first side 74 of the backplate 70 to a side or surface of the friction material 72 that faces toward and is engageable with the brake friction member 50.

The brake pad assembly 52 is moveable between a retracted position and an extended position. In Figure 3, the brake pad assemblies 52 are shown in a retracted position. The brake pad assembly 52 and its friction material 72 are spaced apart from and do not engage the brake friction member 50 when in the retracted position. As such, a clearance gap 80 is provided between the friction material 72 and the brake friction member 50 in the retracted position. In the extended position, the brake pad assembly 52 is actuated toward the brake friction member 50 such that the friction material 72 contacts the brake friction member 50 and the clearance gap 80 is no longer present.

Referring to Figures 2 and 3, the retainer strap 58 may be removably mountable to the brake caliper 56. When installed, the retainer strap 58 may be secured to the brake caliper 56 such that the brake caliper 56 and retainer strap 58 are moveable together with respect to the brake carrier 54. The retainer strap 58 may extend across the brake pad assemblies 52 to help retain the brake pad assemblies 52 in the brake carrier 54. The retainer strap 58 may engage or contact the brake pad assembly 52 or engage or contact a pad spring 60, if provided, when the retainer strap 58 is installed and secured to the brake caliper 56.

Optionally, a pad spring 60 be disposed between the retainer strap 58 and a sensor unit 42. The pad spring 60 may be disposed on the backplate 70 and may engage or contact the retainer strap 58 and the sensor unit 42 such that the pad spring 60 exerts a biasing force that biases the backplate 70 away from the retainer strap 58 to sandwich the sensor unit 42 between the pad spring 60 and the backplate 70 and inhibit removal of the sensor unit 42 from the backplate 70. In some configurations, the retainer strap 58 may engages the sensor unit 42, such as when the pad spring 60 is omitted. It is also contemplated that the sensor unit 24 may not contact or engage the retainer strap 58. For instance, the sensor unit 24 may have sufficient gripping strength to secure itself to the backplate 70.

Referring primarily to Figures 2 and 3, a sensor unit 42 is provided with a friction brake 40. The sensor unit 42 is disposed on a brake pad assembly 52. The sensor unit 42 may be secured to the backplate 70. For instance, the sensor unit 42 may be secured to the backplate 70 such that the sensor unit 42 is moveable with the brake pad assembly 52. For instance, a sensor unit 42 may straddle the backplate 70, which may help retain the sensor unit 42 on the backplate 70 when the brake pad assembly 52 is actuated. In some configurations, the sensor unit 42 is received in the recess 78 in the friction material 72. For instance, the sensor unit 42 may be partially received in the recess 78 of the friction material 72, which may allow the sensor unit 42 to contact or engage the friction material 72 and allow the friction material 72 to constrain movement of the sensor unit 42 and help hold the sensor unit 42 in the recess 78. In some configurations and as is best shown in Figure 3, the sensor unit 42 comprises a first body 90, a second body 92, a bridge 94, and one or more sensors, such as a first sensor 96 and a second sensor 98.

Referring primarily to Figure 3, the first body 90 extends from the first side 74 of the backplate 70. For instance, the first body 90 may contact and extend along a portion of the first side 74 of the backplate 70 where the friction material 72 is not present and into the recess 78 of the friction material 72. The first body 90 is disposed proximate or adjacent to the friction material 72. In some configurations, the first body 90 may engage or contact the friction material 72 in the recess 78 to help inhibit movement of the first body 90 with respect to the friction material 72. The first body 90 may protrude from the first side 74 toward the brake friction member 50 or toward a side of the friction material 72 that faces toward and is configured to contact the brake friction member 50. The first body 90 may have a thickness in a direction that extends away from the second body 92 (e.g., left to right from the perspective shown) that may be less than or equal to the thickness of the friction material 72 when the friction material 72 is unworn. Optionally, the first body 90 may have a greater thickness than the second body 92. In some configurations, the first body 90 includes an outer side 100 and an inner side 102. The outer side 100 may face away from the backplate 70. The inner side 102 may be disposed opposite the outer side 100. The inner side 102 may face toward and may contact or engage the backplate 70.

Referring primarily to Figure 3, the second body 92 extends from the second side 76 of the backplate 70. For instance, the second body 92 may extend from the second side 76 in a direction that extends away from the first side 74. The second body 92 may protrude from the second side 76 of the backplate 70 and extend away from the brake friction member 50 and the friction material 72. The backplate 70 may extend from the first body 90 to the second body 92 such that the backplate 70 separates the first body 90 from the second body 92. Moreover, the backplate 70 may separate the second body 92 from the friction material 72 such that the second body 92 does not contact the friction material 72. In some configurations, the second body 92 is spaced apart from the first body 90. The second body 92 may have the same width or a different width than the first body 90.

The bridge 94 interconnects the first body 90 and the second body 92. For instance, the bridge 94 may extend from the first body 90 to the second body 92 and may extend across the backplate 70, such as across a top side of the backplate 70. In some configurations, the bridge 94 engages the pad spring 60 and the backplate 70 or the retainer strap 58. The bridge 94 may be integrally formed with the first body 90 and the second body 92. For instance, the first body 90, second body 92, and the bridge 94 may be integrally formed of a polymeric material, such as silicone, that can withstand the temperatures associated with braking while maintaining sufficient structural integrity (e.g., without melting). Moreover, such a material may limit heat absorption and help provide a degree of thermal insulation that may help protects components inside the sensor unit 42.

Referring to Figure 3, sensors that may be provided with the sensor unit 42 will now be discussed. As an overview, one or more sensors may be encapsulated in the sensor unit 42. A sensor may be configured to provide a signal indicative of one or more attributes associated with the friction brake 40. As examples, the sensor may detect or provide a signal indicative of wear of the friction material 72, temperature of the brake pad assembly 52, or the like. Sensors will be discussed below with reference to a first sensor 96 and a second sensor 98 that are of different types or that have different configurations.

The first sensor 96 is disposed inside the first body 90 of the sensor unit 42. The first sensor 96 may be encapsulated in the first body 90. For instance, the first sensor 96 may be positioned between the outer side 100 and the inner side 102 of the first body 90 when the first body 90 is unworn. The first sensor 96 may not be disposed in the second body 92, in the bridge 94, or both.

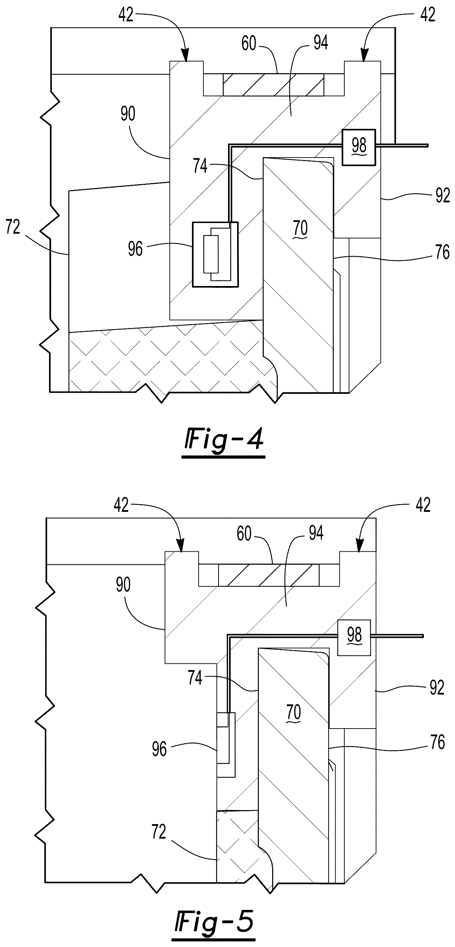

The first sensor 96 may have any suitable configuration. In some configurations, the first sensor 96 is configured to provide a signal indicative of wear of the friction material 72. For instance, the first sensor 96 may comprise one or more resistors. The friction material 72 wears when the friction material 72 engages the brake friction member 50. As a result, the thickness of the friction material 72 decreases. After sufficient wear occurs, the side of the friction material 72 that faces toward the brake friction member 50 may be generally aligned with the outer side 100 of the first body 90. As a result, additional brake applications may result in engagement of the friction material 72 and the first body 90 with the brake friction member 50 and wear of both the friction material 72 and the first body 90. After sufficient wear occurs, the first sensor 96 or a portion thereof may be exposed, severed, or both. An example of this is shown in Figure 5. In this condition, the signal generated by the first sensor 96 or may be associated with opening or closing an electrical circuit. For instance, the electrical circuit associated with first sensor 96 may sever or otherwise disconnect a normally continuous electrical circuit, resulting in a change to one or more electrical attributes, such as a drop in current or inability to conduct current, increase in resistance, etc. Alternatively, a first sensor 96 having a normally discontinuous or open electrical circuit may become closed when conductors of the first sensor 96 contact the brake friction member 50, thereby allowing current to be conducted through the brake friction member 50.

In some configurations, the first sensor 96 is configured to provide a signal indicative of temperature of the first body 90. For instance, the first sensor 96 may be a thermal sensor, such as a thermistor or thermocouple. In the case of a thermistor, the resistance of the thermistor varies in response to temperature. The thermistor may be of any suitable type, such as a negative temperature coefficient thermistor or a positive temperature coefficient thermistor. Resistance of a negative temperature coefficient thermistor decreases as temperature increases. The resistance of a positive temperature coefficient thermistor increases as its temperature increases. The first sensor 96 may not include a controller, such as a microprocessor, since the temperatures incurred by the first body 90 during brake application may exceed the operating temperature of a microprocessor. The first sensor 96 may provide an analog signal or analog output.

The second sensor 98 is disposed inside the second body 92. The second sensor 98 is electrically connected to the first sensor 96, such as with a conductor like a wire. The first sensor 96 may be configured to provide a signal to the second sensor 98. The second sensor 98 may be encapsulated in the second body 92. For instance, the second sensor 98 may be positioned behind the backplate 70 and may be spaced apart from the friction material 72. As a result, the second sensor 98 is disposed farther away from the brake friction member 50 and is disposed farther away from where friction occurs and heat is generated during brake application. Moreover, the backplate 70 may help shield the second sensor 98 from the higher temperatures to which the first sensor 96 is disposed. It is noted that the second sensor 98 may be positioned further down from the position shown so that the second sensor 98 is entirely disposed behind the backplate 70 and below the bridge 94. The second sensor 98 may not be disposed in the first body 90, the bridge 94, or both.

The second sensor 98 has a different configuration than the first sensor 96. In some configurations, the second sensor 98 includes a microprocessor. As an example, the second sensor 98 may be configured as a digital temperature sensor that may output a digital signal. An example of a digital temperature sensor is MAX31825 digital temperature sensor from Maxim Integrated.

In some configurations, the first sensor 96 is electrically connected to the second sensor 98 such that the signal from the first sensor 96 is provided to the second sensor 98. The second sensor 98 may provide an output or output signal to the controller 44 based on the signal from the first sensor 96.

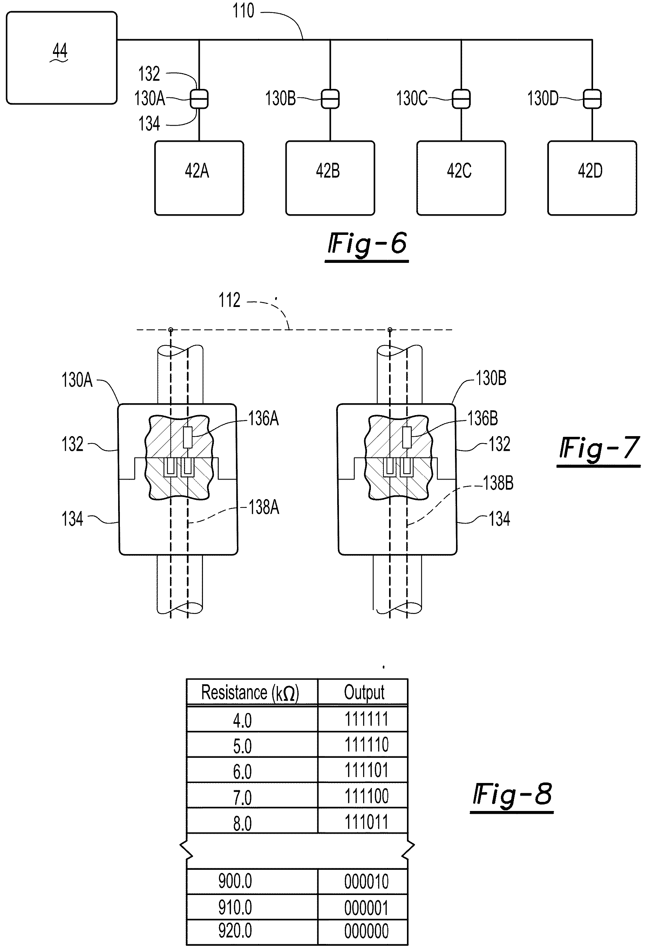

Referring to Figures 1 and 6, a plurality of sensor units 42 may be provided. The sensor units are distinguished with letters A, B, C, and D in these figures as previously discussed. A sensor unit 42 is provided with each friction brake 40. The sensor units 42 may be electrically connected to the controller 44 via a wire harness 110. The wire harness 110 may include a data line or data bus 112 as is best shown in Figure 7. Each sensor unit 42 may communicate with the controller 44 via the data bus 112. Using a data bus allows of multiple sensor units 42 to communicate with the controller 44 rather than hardwiring each sensor unit 42 to the controller 44 with one or more dedicated wires, thereby reducing the cost and complexity of the wire harness 110. The controller 44 is electrically connected to the second sensor 98 by the data bus 112.

The controller 44 may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, the controller 44 utilizes one or more microprocessors to execute a computer-program that is embodied in a non-transitory computer readable medium that is programmed to perform any number of the functions as disclosed. Further, the controller 44 as provided herein may include a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller as disclosed also includes hardware-based inputs and outputs for receiving and transmitting data, respectively from and to other hardware-based devices as discussed herein.

The controller 44 or control system may be configured to monitor and/or control operation of the brake system 22. The controller 44 may include one or more control modules or controllers 44 that may be provided to monitor and control various components. For simplicity, a single controller 44 is shown in Figures 1 and 6.

Referring to Figure 1, in some configurations, the controller 44 is electrically connected to and communicates with a communication device 120. The communication device 120 may receive an output signal from the controller 44, provide an input signal to the controller 44, or combinations thereof. For instance, the communication device 120 may be provided to receive an input from the driver or vehicle operator and optionally to provide information to the driver. The communication device 120 may be of any suitable type or types, such as a switch, button, sensor, display, touchscreen, or the like the communication device 120 may facilitate communication with the driver, such as by providing a visual notification, audible notification, haptic notification, or combinations thereof.

The controller 44 communicates with each sensor unit 42 via the data bus 112. In such a configuration, it is useful to uniquely identify each sensor unit 42 so that the source of the signal or communication can be determined by the controller 44. Uniquely identifying each sensor unit 42 allows the location of the sensor unit 42 on the vehicle 10 to be mapped so that a technician or vehicle operator can readily determine the location of the sensor unit 42 associated with a notification or warning from the controller 44. Such a notification or warning may be communicated via the communication device 120.

Referring to Figures 6 and 7, in some configurations, the second sensor 98 and the wire harness 110 cooperate to uniquely identify a sensor unit 42. In Figure 6, a schematic representation that shows four sensor units 42 that are connected to the controller 44 by the wire harness 110. The sensor units 42 are designated 42A, 42B, 42C, and 42D. The wire harness 110 is configured with electrical hardware or circuitry that allows each sensor unit 42 to be uniquely identified. A connector plug assembly is used to electrically connect each sensor unit 42 to a corresponding branch or pigtail of the wire harness 110. The connector plugs may be generically referenced with reference number 130 and more specifically designated with an accompanying letter, yielding connector plug assemblies 130A, 130B, 130C, and 130D as shown. As is best shown in Figure 7, each connector plug assembly comprises a wire harness connector plug, which may be referred to as a first connector plug 132, and a corresponding sensor unit connector plug, which may be referred to as a second connector plug 134. Each connector plug assembly 130A, 130B, 130C, and 130D may comprise a first connector plug 132 and a second connector plug 134. For simplicity, only two connector plug assemblies 130A and 130B are illustrated in Figure 7.

Each first connector plug 132 is configured to mate with the second connector plug 134. The first connector plug 132 and the second connector plug 134 may have any suitable configuration. In the configuration shown, the first connector plug 132 is depicted with a female configuration while the second connector plug 134 is depicted with a male configuration; however, configurations may be reversed.

In some configurations, each first connector plug 132 comprises a resistor. For convenience in reference, the resistor provided with the first connector plug 132 of connector plug assembly 130A is referred to as a first resistor 136A. The resistor of the first connector plug 132 of connector plug assembly 130B is referred to as a second resistor 136B. In some configurations, the wire harness 110 has an associated wire that grounds each resistor or an associated resistor.

The first resistor 136A is disposed in the first connector plug 132 of connector plug assembly 130A. The first resistor 136A is electrically connected to the second sensor 98 of sensor unit 42A with a first conductor 138A, such as an electrical conductor like a wire. The second sensor 98 may be configured to measure the resistance or resistance value of the first resistor 136A, generate a first location address based on the resistance value of the first resistor 136A, and provide the first location address to the controller 44 via the data bus 112. The first location address may be indicative of the location of the associated sensor unit 42A. As an example, the controller or microprocessor of the second sensor 98 of sensor unit 42A or provided with the second sensor 98 of sensor unit 42A may generate a first location address that is a digital output or bit sequence based on the resistance value of the first resistor 136A. A plurality of resistor values or resistor value ranges may be stored in memory, such as in a lookup table. A corresponding digital output may be selected from the lookup table by determining the output or bit sequence that is associated with resistor value or resistor value range (e.g., a bit sequence of 0001 for the resistance of the first resistor, such as 20 Ω).

A second resistor 136B is disposed in the first connector plug 132 of connector plug assembly 130B. The second resistor 136B is electrically connected to the second sensor 98 of sensor unit 42B with a second conductor 138B, such as an electrical conductor like a wire. The second sensor 98 may be configured to measure the resistance or resistance value of the second resistor 136B, generate a second location address based on the resistance value of the second resistor 136B, and provide the second location address to the controller 44 via the data bus 112. As an example, the controller or microprocessor of the second sensor 98 of sensor unit 42B or provided with the second sensor 98 of sensor unit 42B may generate a second location address that differs from the first location address and that is a digital output or bit sequence based on the resistance value of the second resistor 136B. The second location address may be indicative of the location of the associated sensor unit 42B. A corresponding digital output may be selected from the lookup table by determining the output or bit sequence that is associated with resistor value or resistor value range (e.g., a bit sequence of 0010 for the resistance of the second resistor, such as 30 Ω).

Thus, the first resistor 136A and the second resistor 136B have different electrical resistances. Similarly, resistors associated with the remaining connector plugs may also have corresponding resistors with different or unique resistances as compared to the resistors of the other connector plugs. The bit sequence may be transmitted to the controller 44 via the data bus 112. The controller 44 may then decode the bit sequence to associate a bit sequence with a particular sensor unit. For instance, different bit sequences may be associated with different sensor unit or friction brake locations and stored in memory of the controller 44. The controller 44 may then match the bit sequence to an associated location stored in memory. As an example, the controller 44 may be programmed with location information or different location designators for each location address. For example, sensor unit 42A may be mapped to or correspond with the first location address (e.g., 0001), sensor unit 42B may be mapped to or correspond with the second location address (e.g., 0010), etc. The bit sequence may be transmitted at a particular location or sequence in a communication to the controller 44 to allow the location-related bit sequence to be readily identified.

Providing resistors with different electrical resistances with the wire harness 110 allows the sensor units and second connector plugs 134 to be standardized, which facilitates assembly and replacement. Providing the resistors with the first connector plugs allow a defective or faulty resistor to be easily replaced without replacing the entire wire harness, which reduces maintenance time and associated costs. Providing different at known locations allows the resistances to be easily mapped.

As another example, it may be desired to provide a digital signal to the data bus rather than an analog signal. It may also be desirable to provide a solid-state sensor , analog sensor, or sensor without a microprocessor as the first sensor 96 to better withstand environmental conditions (e.g., temperature, friction material wear, wear of the first body), provide more accurate temperature sensing, to reduce the cost of the first sensor 96 (such as by not including a microprocessor), or combinations thereof. For instance, the first sensor 96 may be configured as a thermistor that provides a signal indicative of temperature to the second sensor 98 rather than bypassing the second sensor 98. The resistance of the thermistor changes in response to temperature. The second sensor 98 may receive the signal from the thermistor and generate an output signal based on the signal from the thermistor. In some configurations, the output signal generated by the second sensor 98 includes a serial number and a temperature code.

The serial number may be the serial number or serial code of the second sensor 98. For instance, each second sensor 98 may be provided with a unique serial number. The serial number multiple bits, such as 64 bits. The serial numbers may be mapped to specific friction brake locations or sensor unit locations by the controller 44. For instance, a sensor unit may be connected to the data bus and communicate its serial number to the controller 44. The controller 44 may receive the serial number and pair of the serial number to a predetermined vehicle location. For instance, sensor units may be connected to the data bus 112 in a predetermined pattern, such as starting with a front driver's side friction brake and then proceed in a clockwise or counterclockwise pattern around the vehicle 10, thereby each sensor unit to be sequentially mapped with each serial number being associated with a corresponding location in the connection sequence. As another example, all sensor units may be connected to the data bus 112 and one sensor unit may be disconnected at a time in a predetermined pattern. Thus, the controller 44 may initially receive a serial number from each sensor unit, sensor units may then be disconnected from the data bus one at a time in a predetermined location pattern. For instance, the sensor unit at the front driver's side friction brake may be disconnected first. Disconnection results in the serial number associated with that sensor unit no longer being communicated to the controller 44. Thus, the controller 44 may pair the sensor unit having the missing serial number with the front driver's side friction brake location. That sensor unit may then be reconnected to the data bus 112 and the next sensor unit in the sequence may be disconnected. The disconnection/reconnection sequence may be repeated until all sensor units are mapped by the controller 44. Thus, the controller 44 can identify individual sensor units based on the serial number of the second sensor 98 and a corresponding location.

The temperature code is based on the signal from the first sensor 96. The second sensor 98 may be configured to receive, detect, or measure the resistance or resistance value of the first sensor 96. Rather than generating a location address based on the resistance value, the second sensor 98 may generate sequence or bit sequence that is associated with the resistance or resistance value provided by the first sensor 96, such as the resistance of a thermistor. A plurality of resistor values or resistor value ranges may be stored in memory, such as in a lookup table. A corresponding digital output may be selected from the lookup table by determining the output or bit sequence that is associated with resistor value or resistor value range. An example of such a table is shown in Figure 8, noting that only some resistance values and corresponding outputs or bit sequences are shown as represented by the break lines after the 8 Ω resistor row. Using a thermistor as an example, as the resistance of the thermistor changes, the signal or bit sequence generated by the second sensor 98 changes in response. The second sensor 98 then transmits its serial number and the bit sequence or temperature code to the controller 44.

The controller 44 may then process or decode the signal by using the serial number to identify the sensor unit and by using the temperature code to identify a temperature associated with the temperature code. For instance, each temperature code may correspond with a temperature value or temperature value range. The temperature values or temperature value ranges may be stored in memory of the controller 44, such as a lookup table, and a temperature value or temperature value range may be selected from the lookup table based on the temperature code. The controller 44 may communicate the temperature or temperature range to the communication device 120 or issue a notification via the communication device 120 when the temperature or temperature range exceeds a predetermined temperature limit. The predetermined temperature limit may be a temperature that exceeds the expected operating temperature of the friction brake. As a non-limiting example, the temperature value may be 600°F (316°C).

Generating a temperature code with the second sensor 98 allows a signal indicative of temperature to be provided in a digital format before being transmitted to the wire harness, which allows a common data bus to be used multiple sensor units. Generating the temperature code with the second sensor 98 allows the second unit and an associated microprocessor of the second sensor 98 to be positioned in a lower temperature region of the sensor unit 42, which may allow a less expensive microprocessor or second sensor 98 to be used. In some configurations, the temperature code may be generated in a similar manner as generating a location address; however, the temperature code is indicative of temperature, which is a variable rather than a constant or steady-state location.

In some configurations, the signal from the first sensor 96 may be indicative of a state of wear of the friction material 72 of a brake pad assembly 52. For instance, a first sensor 96 that is configured as a thermistor or the like may provide a resistance or resistance value within its operating range. As a nonlimiting example shown in Figure 8, the thermistor may have an operating range of 9-920 kΩ. In this example, 9kΩ may be designated as a first resistance boundary value and 920 kΩ may be designated as a second resistance boundary value. The first resistance boundary value and the second resistance boundary value may be selected such that the signal indicative of temperature provided by the first sensor 96 is expected to fall between the first resistance boundary value in the second resistance boundary value throughout the operating temperature range of the friction brake when the first sensor 96 is functioning properly.

The signal from the first sensor 96 may be indicative of a state of wear of the friction material 72 when the signal from the first sensor 96 is indicative of resistance that is less than the first resistance boundary value, greater than the second resistance boundary value, or both.

In some configurations, a signal that is greater than the second resistance boundary value may be indicative of an open circuit caused by first body 90 being worn to the extent of damaging the thermistor and resulting in an open circuit condition such as is shown in Figure 5. The thermistor may be positioned such that an open circuit condition occurs when the friction material 72 is worn to a predetermined depth or by a predetermined amount. Thus, the signal from the first sensor 96 may be indicative of friction material that is worn down to the thermistor location. The controller 44 may compare the temperature associated with the signal from the first sensor 96 to the second resistance boundary value. The controller 44 may generate a warning or notification when the temperature associated with the signal from the first sensor 96 exceeds the second resistance boundary value. A warning or notification may be output to the communication device 120 and may identify the location of the associated sensor unit 42 or prompt a driver to inspect or potentially replace an associated brake pad assembly 52.

As another example, a signal that is less than the first resistance boundary value may also be indicative of a state of wear of the friction material 72. For example, an electrical circuit may be closed when the first sensor is exposed and engages the brake friction member 50, thereby providing resistance that is less than expected during normal thermistor operation thus less than the first resistance boundary value. The controller 44 may compare the temperature associated with the signal from the first sensor 96 to the first resistance boundary value and generate a warning or notification when the temperature associated with the signal from the first sensor 96 is less than the first resistance boundary value.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A brake system comprising:
a friction brake that comprises a brake pad assembly, the brake pad assembly comprising:
a backplate that comprises a first side and a second side disposed opposite the second side; and
friction material that extends from the first side and extends away from the second side;
a sensor unit that is disposed on the brake pad assembly, the sensor unit comprising:
a first body that extends from the first side of the backplate and is disposed proximate the friction material;
a first sensor that is disposed inside the first body;
a second body that extends from the second side of the backplate and is connected to the first body; and
a second sensor that is disposed inside the second body and that is electrically connected to the first sensor; and
a controller that is electrically connected to the second sensor by a data bus.

2. The brake system of claim 1, wherein the first sensor is encapsulated in the first body and is not disposed in the second body.

3. The brake system of claim 1 or claim 2, wherein the second sensor is encapsulated in the second body and is not disposed in the first body.

4. The brake system of any previous claim, wherein the backplate extends from the first body to the second body and separates the second body from the friction material such that the second body does not contact the friction material.

5. The brake system of any previous claim, wherein the sensor unit is secured to the backplate.

6. The brake system of any previous claim, wherein the first sensor is a thermistor,
wherein the thermistor is configured to provide a signal indicative of temperature of the first body to the second sensor.

7. The brake system of claim 6, wherein the second sensor is configured to:
receive the signal from the thermistor; and
generate an output signal that comprises:
a serial number of the second sensor; and
a temperature code based on the signal from the thermistor, optionally wherein the controller is configured to receive the output signal from the second sensor via the data bus, determine a location of the sensor unit based on the serial number, and determine a temperature value based on the temperature code,
optionally wherein the signal from the thermistor is indicative of a state of wear of the friction material of the brake pad assembly when the signal is indicative of resistance that is less than a first resistance boundary value,
optionally wherein the signal from the thermistor is indicative of a state of wear of the friction material of the brake pad assembly when the signal is indicative of resistance that is greater than a second resistance boundary value.

8. A method of controlling a brake system, the method comprising:
providing a signal with a thermistor of a sensor unit to a second sensor of the sensor unit, the sensor unit being disposed on a brake pad assembly of a friction brake, wherein the signal is indicative of a temperature of the brake pad assembly;
generating, with the second sensor, an output signal that comprises a serial number of the second sensor and a temperature code based on the signal from the thermistor;
communicating the output signal to a controller; and
identifying, with the controller, a location of the sensor unit based on the serial number;
identifying, with the controller, a temperature of the sensor unit based on the temperature code; and
communicating, with the controller, the location and temperature of the sensor unit to a communication device.

9. The method of claim 8, wherein communicating the output signal further comprises communicating the output signal to the controller via a data bus.

10. The method of claim 8 or claim 9, wherein communicating the location and temperature of the sensor unit to the communication device further comprises providing a notification with the communication device when the temperature exceeds a predetermined temperature value.

11. The method of any of claims 8 to 10, further comprising mounting the sensor unit on the brake pad assembly such that a first body of the sensor unit that encapsulates the thermistor extends from a first side of a backplate of the brake pad assembly that is disposed adjacent to friction material of the brake pad assembly and a second body of the sensor unit that encapsulates the thermistor extends from a second side of the backplate of the brake pad assembly that is disposed opposite the first side before providing the signal with the thermistor.

12. A brake system comprising:
first and second friction brakes that each comprise:
a brake pad assembly that comprises:
a backplate that comprises a first side and a second side disposed opposite the second side; and
friction material that extends from the first side and extends away from the second side;
a sensor unit that is disposed on the backplate, the sensor unit comprising:
a first body that extends from the first side of the backplate and is disposed proximate the friction material;
a first sensor that is disposed inside the first body;
a second body that extends from the second side of the backplate and is connected to the first body; and
a second sensor that is disposed inside the second body and that is electrically connected to the first sensor;
a controller; and
a wire harness, the wire harness comprising:
a first resistor that is electrically connected to the sensor unit of the first friction brake with a first conductor;
a second resistor that is electrically connected to the sensor unit of the second friction brake with a second conductor, wherein the first resistor and the second resistor have different electrical resistances; and
a data bus that electrically connects that electrically connects the controller to the sensor unit of the first friction brake and the sensor unit of the second friction brake.

13. The brake system of claim 12, wherein the second sensor of the sensor unit of the first friction brake is configured to measure a resistance value of the first resistor, generate a first location address based on the resistance value of the first resistor, and provide the first location address to the controller, the first location address being indicative of a location of the sensor unit of the first friction brake, optionally wherein the first resistor is disposed in a first connector plug of the wire harness, wherein the first connector plug is coupled to a connector plug of the sensor unit of the first friction brake.

14. The brake system of claim 12 or claim 13, wherein the second sensor of the sensor unit of the second friction brake is configured to measure a resistance value of the second resistor, generate a second location address based on the resistance value of the second resistor, and provide the second location address to the controller, the second location address being indicative of a location of the sensor unit of the second friction brake.

15. The brake system of claim 14, wherein the second resistor is disposed in a second connector plug of the wire harness, wherein the second connector plug is coupled to a connector plug of the sensor unit of the second friction brake.
